# EUROPÄISCHE PATENTSCHRIFT

(11) **EP 2 643 623 B1**
(45) Veröffentlichungstag und Bekanntmachung des Hinweises auf die Patenterteilung: **20.07.2016**
(21) Anmeldenummer: 11771015.2
(22) Anmeldetag: 28.09.2011
(51) Int. Cl.: F16L 13/02

(54) **ROHRANORDNUNG UND VERFAHREN**
PIPE ARRANGEMENT AND PROCESS
ENSEMBLE DE TUYAUX ET PROCÉDÉ

(30) Priorität: 24.11.2010 DE 102010052212
(43) Veröffentlichungstag der Anmeldung: 02.10.2013
(73) Patentinhaber: Rosen Swiss AG, 6370 Stans (CH)
(72) Erfinder: ROSEN, Hermann, 6047 Kastanienbaum (Horw LO) (CH)
(74) Vertreter: Busse & Busse
(86) Internationale Anmeldenummer: PCT/EP2011/004837
(87) Internationale Veröffentlichungsnummer: WO 2012/069105

(56) Entgegenhaltungen:
- DE-A1- 3 315 819
- US-A- 5 634 672

## Beschreibung

Die vorliegende Erfindung betrifft eine Rohranordnung umfassend zwei Rohre und eine Muffe, wobei beide Rohre eine äußere Metallwand und eine innere, wärmeempfindliche Auskleidung aus Kunststoff sowie einander zugewandte Stirnseiten aufweisen und über die außerhalb der Rohre angeordnete und an zumindest ein Rohr angeschweißte Muffe miteinander verbunden sind.

Ein gattungsgemäßer Stand der Technik ist beispielsweise der DE 21 58 692 zu entnehmen, die verschiedene Anordnungen zur Verbindung zweier mit einer wärmeempfindlichen Auskleidung versehener Rohre vorschlägt. Nachteilig ist bei den dort gezeigten Lösungen jedoch der im Vergleich zum eigentlichen Rohraußendurchmesser deutlich größere Aufbau bzw. Durchmesser der Muffe. Dieser ergibt sich insbesondere durch die im Bereich der Schweißnaht von der Außenseite des Rohres beabstandete Anordnung der Muffe ist.

In der DE 24 16 308 sind ebenfalls verschiedene Lösungen zur Verbindung entsprechender mit einer wärmeempfindlichen Auskleidung versehener Rohre vorgeschlagen. Dort wird auf eine Muffe komplett verzichtet und im Bereich der Stirnseiten der Rohre vor Verschweißen derselben die Innenauskleidung von der Metallwand getrennt. Insbesondere im Bau von Pipelines für hochabrasive Transportgüter wie Ölsande ist dieses Verfahren nicht prozesssicher genug. Das Auftrennen der Auskleidung von oftmals nicht besonders ausgebildetem Personal bei Installation der Rohre vor Ort kann zu kritischen Beschädigungen der Auskleidung der Rohre führen. Die Verschweißung im Bereich der kritischen Stoßkanten kann etwaige vorhandene Beschädigungen aufgrund ungünstiger Wärmeeinwirkung auf das wärmeempfindliche Material der Auskleidung vergrößern. Dies ist von den Pipelinebetreibern unerwünscht.

Weiterhin ist aus der US 5,634,672 eine Rohranordnung mit innenseitig mit Kunststoff ausgekleideten Rohren bekannt, die stirnseitig zunächst mit den über die Metallwandungen überstehenden Kunststoff-Auskleidungen verbunden werden und dann zwischen der Auskleidung und den im Bereich der Stirnseiten radial aufgeweiteten und dadurch radial von der Auskleidung abgesetzten beiderseitigen Stirnseiten der Metallwände mit einer Füllung von Isoliermaterial versehen werden, ehe die Lücke zwischen den voneinander axial beabstandeten Stirnseiten der Metallwände durch Aufsetzen und Aufschweißen von zylindrischen Halbschalen überbrückt und geschlossen wird. Hierfür ergibt sich allerdings eine aufwendige Fertigung der Rohre mit stirnseitig aufgeweiteter Metallwand und stirnseitig beabstandeter und überstehender Auskleidung und insbesondere eine komplizierte Rohrverlegung mit einer Innen-Verbindung der Auskleidung, mit der Anbringung einer Isolation um die Verbindung der Auskleidung herum und insbesondere mit einem Verschweißen der Verbindungs-Halbschalen mit den beiderseitigen Metallwänden, die auch zu Lasten der Prozesssicherheit geht. Die an den Stirnseiten aufgeweiteten Rohre bedingen auch einen entsprechend vergrößerten Raumbedarf für die Rohranordnungen.

Eine gattungsgemäße Rohranordnung nach DE 33 15 819 A1 sieht eine außenliegende Metallwand und, mit radialem Abstand innerhalb dieser, ein eigenständiges Innenrohr für eine Auskleidung vor, das aus Rohrstücken zusammenzuschweißen ist und dazu jeweils gegenüber der Metallwand axial vorstehen soll. Die Rohre für die Metallwand werden schrittweise danach über die Auskleidungsrohre geschoben und mit muffenartig die beiden Stirnseiten übergreifenden Rohrstücken zusammengeschweißt, wobei die Kunststoffrohre an den unterhalb der Ringschweißungen liegenden Stellen zuvor eine Hülse oder ein Wickel aus Isoliermaterial als Wärmeschutzelement erhalten hauben. Danach wird der zwischen dem auskleidenden Kunststoffrohr und der außenliegenden Metallwand vorgegebene Ringspalt mit einer aushärtenden Vergussmasse verfüllt.

Eine solche Rohrverlegung ist aufwendig und durch die Anwendung verschiedener Verbindung- und Vergusstechniken kompliziert. Die insbesondere im Pipelinebau ungewöhnlichen und schwer zu überwachenden Arbeitsgänge sind kritisch für die Prozesssicherheit.

Es ist daher Aufgabe der vorliegenden Erfindung, in einer Rohranordnung die Verbindung zweier Rohre, die jeweils mit einer wärmeempfindlichen Auskleidung versehen sind, prozesssicherer zu gestalten.

Die Aufgabe wird gelöst durch einen Gegenstand gemäß Anspruch 1 sowie durch ein Verfahren gemäß Anspruch 10. Weitere Vorteile und Einzelheiten der Erfindung sind den auf diese Ansprüche rückbezogenen Unteransprüchen sowie der nachfolgenden Beschreibung zu entnehmen.

Erfindungsgemäß ist vorgesehen, dass entlang einer von der Stirnseite eines ersten Rohres in Rohrlängsrichtung beabstandeten Schweißnaht, die die Muffe mit diesem Rohr verbindet, in Umfangsrichtung des Rohres und zwischen der Metallwand und der Auskleidung ein Isolator integriert ist. Bei der Montage der beiden Rohre vor Ort ist daher vor dem Anbringen der Schweißnaht lediglich das mit der Muffe zu verschweißende Rohr in diese einzuführen. Eine Beschädigung der inneren Auskleidung des Rohres kann ausgeschlossen werden. Die Auskleidung des Rohres muss nicht von der Metallwand getrennt werden. Die Verbindung der beiden Rohre erfolgt somit störunanfälliger. Gleichzeitig kann auf die Vergrößerung des Durchmessers der Muffe aufgrund des zwischen Muffe und Außenseite/-wand der Metallwand des Rohres vorzusehenden Abstandes verzichtet werden, da der Isolator im Rohr integriert ist. Unter einer Integration wird hierbei die Einbringung des Isolators zwischen Auskleidung und Rohrwand bezeichnet. Vorzugsweise ist der Isolator von dem Rohrinnenraum getrennt und ist auf allen Seiten von der Auskleidung, einer Zwischen- oder Klebeschicht oder der inneren Oberfläche der Metallwand begrenzt.

Aufgrund der Beabstandung der Schweißnaht von der Stirnseite des Rohres, wobei auch der Isolator von der Stirnseite beabstandet ist, wird eine ungünstige Einwirkung des Schweißprozesses auf den Bereich der Stirnkanten vermieden. In dem besonders kritischen Bereich der einander zugewandten Stirnseiten des Rohres liegt die Auskleidung dann direkt an der Metallwand oder an einer etwaigen Klebe- oder Zwischenschicht anliegen. Vorzugsweise befindet sich die Schweißnaht zumindest 5 cm von der Stosskante entfernt.

Dabei wird der Isolator bereits bei oder vor dem Einbringen der Auskleidung des Rohres an dessen Metallwand befestigt.

Hierbei ist der Isolator unmittelbar auf der Metallwand des Rohres befestigt. Bei einer Einbringung der Auskleidung des Rohres beispielsweise durch Ausschleudern des Rohres mit einem flüssigen PU-Material wird der Isolator dann von der Auskleidung bedeckt, so dass der innere Durchmesser des Rohres überall gleichmäßig ist.

Vorzugsweise ist der Isolator rohrförmig, d.h. insbesondere hohlzylindrisch ausgebildet, so dass einerseits die Einbringung und Befestigung des Isolators im Rohrinneren einfach möglich ist, gleichzeitig jedoch ein ausreichend großer Bereich der Innenauskleidung vor der bei dem Verschweißen des Rohres mit der Muffe entstehenden Energie geschützt wird.

Vorteilhafterweise weist der Isolator einen Metallring und insbesondere eine weitere wärmeisolierende Schicht, die mit dem Metallring verbunden ist, auf.

Insbesondere bei Rohranordnungen, bei denen die Muffe bzw. der Rohrverbinder vor der Auskleidung des einen Rohres noch nicht mit diesem verbunden ist, weisen beide Rohre je einen von ihren Stirnseiten beabstandeten Isolator zwischen Auskleidung und Metallwand auf. In diesem Fall kann während der Installation vor Ort die Muffe auf das Rohr bis auf Höhe des Isolators aufgeschoben und anschließend mit dem Rohr verschweißt werden. Nachfolgend wird dann das weitere Rohr in die Muffe eingeschoben und verschweißt. Zur Kenntlichmachung des Isolators ist es vorteilhaft, auf der Außenseite des Rohres Markierungen vorzusehen, die die Mitte und insbesondere auch in Längsrichtung der Rohre betrachtet die vordere und hintere Kante des Isolators abbilden.

Vorteilhafterweise weist eine erfindungsgemäße Rohranordnung eine Muffe auf, die hohlzylindrisch ausgebildet ist und deren Innenwand sich in Rohrlängsrichtung betrachtet zumindest im Wesentlichen parallel zu einer Außenseite der Rohre erstreckt. Vorzugsweise ist diese Innenwand komplett parallel, so dass sich durch das Aufschieben der Muffe auf das eine Rohr bzw. das Einbringen des weiteren Rohres automatisch eine Ausrichtung der Rohre ergibt. Gleichzeitig ist der Außendurchmesser dieser Rohranordnung geringer als im Stand der Technik, da keine Wärmeisolierung bzw. keine Isolator zwischen Muffe und Rohren angeordnet werden muss.

Für eine mit geringem Außendurchmesser versehene Rohranordnung ist es ebenfalls vorteilhaft, wenn die Schweißnaht eine Stirnseite der Muffe mit der Rohraußenseite verbindet, d.h., in einem Längsschnitt betrachtet ist die Schweißnaht in etwa nasenförmig bzw. dreieckig ausgebildet.

Zur Schaffung eines dichten Übergangs ist es besonders vorteilhaft, wenn die Stirnseiten der Rohre mit einer Stoßkante aus Kunststoff versehen sind und die Rohre insbesondere auf Stoß aneinander anliegen. Die Verbindung wird hierbei mit einer definierten Kraft zusammengebracht und verschweißt. Durch die Komprimierung der Stoßkanten bei einem Ineinanderschieben der Rohre entsteht eine Dichtung, die die Metallwand vor dem zu transportierenden Gut schützt. Für das Einbringen einer definierten Kraftanordnung können dieselben Markierungen vorgesehen sein, die die Lage des Isolators beschreiben. Das Rohr wird dann soweit in die Muffe eingeschoben, bis eine entsprechende Markierung und eine Stirnseite der Muffe übereinander liegen.

Eine erfindungsgemäße Rohranordnung ist leichter herstellbar, wenn die Stoßkante eines jeden Rohres einstückig mit seiner Auskleidung ausgebildet ist.

Ein erfindungsgemäßes Verfahren zur Herstellung einer vorbeschriebenen oder nachfolgend noch weiter beschriebenen Rohranordnung zeichnet sich somit dadurch aus, dass auf der Innenseite der Metallwand zumindest eines Rohres beabstandet von seiner Stirnseite der Isolator aufgebracht wird, dieser anschließend durch Einbringung der Auskleidung des Rohres in dieses integriert wird, anschließend dieses Rohr in eine an einem weiteren, mit einer Auskleidung versehenen Rohr angebrachten Muffe eingeschoben wird und die Muffe mit dem Rohr entlang des Isolators außenseitig des Rohres mit dessen Metallwand verschweißt wird.

Weitere Vorteile und Einzelheiten der Erfindung lassen sich der nachfolgenden Figurenbeschreibung entnehmen. In den Abbildungen der Figuren zeigt in schematischer Weise:
- Fig. 1: einen Längsschnitt durch eine erfindungsgemäße Rohranordnung,
- Fig. 2: einen weiteren erfindungsgemäßen Gegenstand in einer Ansicht nach Fig. 1.

Gleich oder ähnlich wirkende Teile sind - sofern dienlich mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

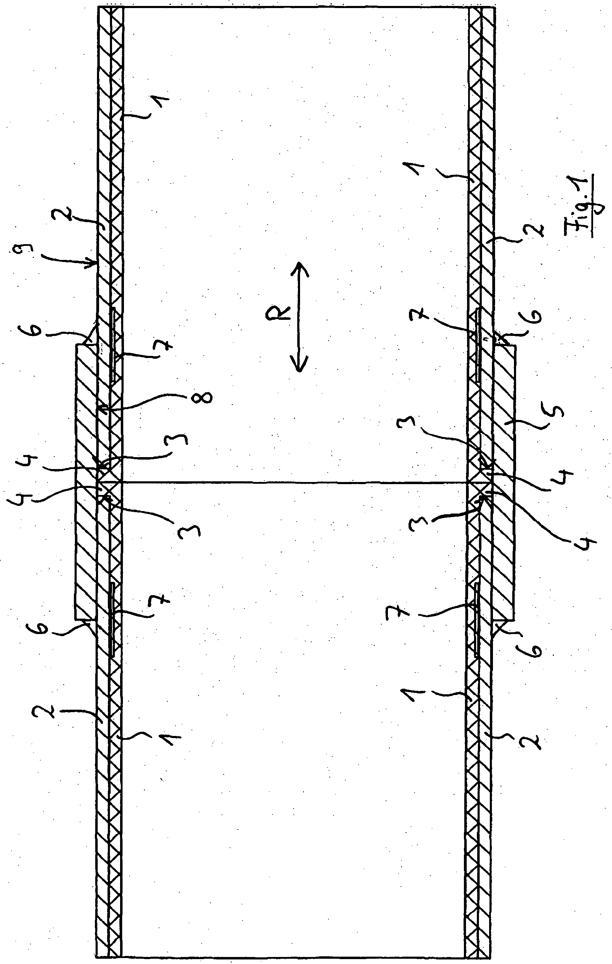

Bei Rohren mit einer inneren Auskleidung handelt es sich insbesondere um Rohre für Pipelines, die hoch abrasive Materialien, wie beispielsweise Ölsande, transportieren. Die Rohre nach Fig. 1 sind insofern mit einer innenliegenden, vorzugsweise aus Polyurethan hergestellten oder Polyurethan aufweisenden Auskleidung 1 versehen. Außenseitig befinden sich die eigentlichen Metallwände 2 des Rohres. Beispielsweise handelt es sich hierbei um Stahlwände. Die Stirnseiten 3 der Metallwände 2 sind von einer ebenfalls aus PU hergestellten und einstückig mit der inneren Auskleidung 1 verbundenen Stoßkante 4 bedeckt.

Die beiden Stoßkanten 4 der Auskleidungen 1 der beiden Rohre stoßen dicht aneinander und bilden eine Dichtung aus. Vor dem Aufeinanderstoßen der beiden Rohre wird eine Muffe 5 auf eines der Rohre aufgebracht und mit diesem verschweißt. Die Anbringung der ersten Schweißnaht 6 erfolgt in einem Bereich, in dem im Polyurethanmaterial der Auskleidung ein Isolator bzw. eine Wärmeisolierung vorgesehen ist. Aufgrund des von der Stirnseite beabstandeten Isolators und der beabstandeten Schweißnaht erfolgt weder eine Beschädigung der Auskleidung noch eine Einwirkung auf die Stoßkanten. Insbesondere entspricht der Abstand des Isolators 7 von der Stirnseite 3 in etwa der Länge des Isolators selbst (betrachtet in Längsrichtung R der Rohre).

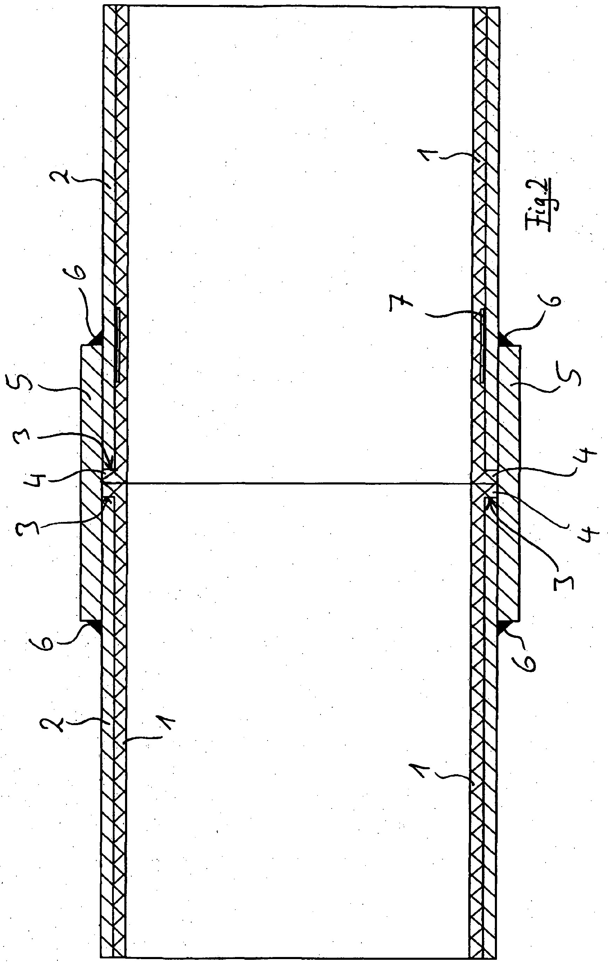

Um das Verbinden der Rohre vor Ort zu beschleunigen, kann typischerweise bereits ein Rohr einseitig mit einer Muffe versehen werden, in die dann vor Ort das weitere Rohr geschoben werden kann. In diesem Fall ist die Muffe bereits werkseitig vor Anbringung der PU-Schicht an die Metallwand angebracht, so dass auf einen der Isolatoren verzichtet werden kann (vgl. Fig. 2). Außenseiten 9 der Rohre und die Innenseite 8 der Muffe verlaufen parallel zueinander, durch Einschieben eines Rohres in die Muffe wird das Rohr bzw. die Muffe ausgerichtet.

Die Muffe ist insbesondere mittels Kehlnahtschweißung mit den Metallwänden verbunden, wobei sowohl Automatenschweißung als auch Handschweißüng möglich ist. Ein geringfügiger, etwaig vorhandener Hohlraum zwischen Muffe und Metallwänden der beiden Rohre ist vorzugsweise nicht höher als 5 mm und kann gegebenenfalls vor Verschweißen der Muffe verfüllt werden.

## Patentansprüche

1. Rohranordnung umfassend zwei Rohre und eine Muffe (5), wobei beide Rohre eine äußere Metallwand (2) sowie einander zugewandte Stirnseiten (3) aufweisen und über die außerhalb der Rohre angeordnete und an zumindest ein Rohr angeschweißte Muffe (5) miteinander verbunden sind, wobei die Rohranordnung eine innere wärmeempfindliche Auskleidung (1) aus Kunststoff aufweist und wobei entlang einer von der Stirnseite (3) eines ersten Rohres in Rohrlängsrichtung beabstandeten Schweißnaht (6), die die Muffe (5) mit diesem Rohr verbindet, in Umfangsrichtung des Rohres und zwischen der Metallwand (2) und der Auskleidung (1) aus Kunststoff ein Isolator (7) integriert ist, wobei beide Rohre eine innere wärmeempfindliche Auskleidung (1) aus Kunststoff aufweisen, die in dem besonders kritischen Bereich der Stirnseiten des Rohres direkt an der Metallwand oder einer etwaigen Klebe- oder Zwischenschicht anliegt **dadurch gekennzeichnet, dass** der Isolator unmittelbar auf der Metallwand (2) des Rohres befestigt ist.

2. Rohranordnung nach Anspruch 1, **dadurch gekennzeichnet, dass** der Isolator (7) eine hohlzylindrische Grundform aufweist.

3. Rohranordnung nach Anspruch 2, **dadurch gekennzeichnet, dass** der Isolator (7) einen Metallring und vorzugsweise eine weitere wärmeisolierende Schicht, die mit dem Metallring verbunden ist, aufweist.

4. Rohranordnung nach einem der vorherigen Ansprüche, **dadurch gekennzeichnet, dass** der Isolator (7) mit der Metallwand (2) verschweißt ist.

5. Rohranordnung nach einem der vorherigen Ansprüche, **dadurch gekennzeichnet, dass** beide Rohre jeweils einen von ihren Stirnseiten (3) beabstandeten Isolator (7) zwischen Auskleidung (1) und Metallwand (2) aufweisen.

6. Rohranordnung nach einem der vorherigen Ansprüche, **dadurch gekennzeichnet, dass** sich eine Innenseite (8) der hohlzylindrisch ausgebildeten Muffe (5) in Rohrlängsrichtung R zumindest im Wesentlichen parallel zu einer Außenseite (9) der Rohre erstreckt.

7. Rohranordnung nach Anspruch 6, **dadurch gekennzeichnet, dass** die Schweißnaht (6) eine Stirnseite der Muffe mit der Außenseite (9) eines Rohres verbindet.

8. Rohranordnung nach einem der vorherigen Ansprüche, **dadurch gekennzeichnet, dass** die Stirnseiten (3) der Rohre mit einer Stoßkante (4) aus Kunststoff versehen sind.

9. Rohranordnung nach Anspruch 8, **dadurch gekennzeichnet, dass** die Stoßkante (4) eines jeden Rohres einstückig mit seiner Auskleidung (1) ausgebildet ist.

10. Verfahren zur Herstellung einer Rohranordnung nach einem der vorherigen Ansprüche, **dadurch gekennzeichnet, dass** die Rohre jeweils mit der Metallwand (2) und der inneren wärmeempfindlichen Auskleidung gefertigt werden, wobei der Isolator (7) auf der Innenseite der Metallwand (2) zumindest eines Rohres beabstandet von dessen Stirnseite (3) aufgebracht und anschließend durch Einbrin gung der Auskleidung (1) des Rohres in diese integriert wird und dass das Rohr in eine Muffe (5) eingeschoben an der Metallwand (2) über dem Isolator (7) mit der Muffe (5) verschweißt wird.

11. Verfahren nach Anspruch 10, **dadurch gekennzeichnet, dass** die mit dem Rohr zu verschweißende Muffe (5) mit dem anstoßenden Rohr fest verbunden ist und bereits vor der Anbringung der Auskleidung (1) des anderen Rohres mit diesem verschweißt wurde.

12. Verfahren nach Anspruch 10, **dadurch gekennzeichnet, dass** in beide Rohre ein Isolator (7) integriert wird und dass die Muffe (5) mit beiden Rohren verschweißt wird.

13. Verfahren nach einem der Ansprüche 10 bis 12, **dadurch gekennzeichnet, dass** eines der Rohre durch Einführen in die hohlzylindrisch ausgebildete Muffe (5) entlang deren Innenseite (8) ausgerichtet wird.

## Claims

1. Pipe assembly comprising two pipes and a sleeve (5), both pipes comprising an outer metal wall (2) and end faces (3) which face one another and being interconnected by the sleeve (5) that is arranged outside the pipes and is welded onto at least one pipe, the pipe assembly comprising an inner thermosensitive lining (1) made of plastics material, and an insulator (7) being integrated along a weld seam (6), which is at a distance from the end face (3) of a first pipe in the pipe longitudinal direction and connects the sleeve (5) to this pipe, in the circumferential direction of the pipe and between the metal wall (2) and the lining (1) made of plastics material, both pipes comprising an inner thermosensitive lining (1) made of plastics material which, in the particularly critical region of the end faces of the pipe, rests directly on the metal wall or on any adhesive or intermediate layer, **characterised in that** the insulator is fixed directly to the metal wall (2) of the pipe.

2. Pipe assembly according to claim 1, **characterised in that** the insulator (7) has a hollow-cylindrical basic shape.

3. Pipe assembly according to claim 2, **characterised in that** the insulator (7) comprises a metal ring and preferably a further heat-insulating layer which is connected to the metal ring.

4. Pipe assembly according to any of the preceding claims, **characterised in that** the insulator (7) is welded to the metal wall (2).

5. Pipe assembly according to any of the preceding claims, **characterised in that** both pipes each comprise an insulator (7), which is at a distance from the end faces (3) thereof, between the lining (1) and the metal wall (2).

6. Pipe assembly according to any of the preceding claims, **characterised in that** an inner face (8) of the hollow-cylindrical sleeve (5) extends in the pipe longitudinal direction R at least substantially in parallel with an outer face (9) of the pipes.

7. Pipe assembly according to claim 6, **characterised in that** the weld seam (6) connects an end face of the sleeve to the outer face (9) of a pipe.

8. Pipe assembly according to any of the preceding claims, **characterised in that** the end faces (3) of the pipes are provided with an abutting edge (4) made of plastics material.

9. Pipe assembly according to claim 8, **characterised in that** the abutting edge (4) of each pipe is formed integrally with the lining (1) thereof.

10. Method for producing a pipe assembly according to any of the preceding claims, **characterised in that** the pipes are each manufactured together with the metal wall (2) and the inner thermosensitive lining, the insulator being mounted on the inner face of the metal wall (2) of at least one pipe at a distance from the end face (3) thereof and then being integrated therein by introducing the lining (1) of the pipe, and **in that** the pipe is inserted into a sleeve (5) and is welded to sleeve (5) over the insulator (7) on the metal wall (2).

11. Method according to claim 10, **characterised in that** the sleeve (5) that is to be welded to the pipe is rigidly connected to the abutting pipe and was already welded to the other pipe before the lining (1) was applied thereto.

12. Method according to claim 10, **characterised in that** an insulator (7) is integrated into both pipes and **in that** the sleeve (5) is welded to both pipes.

13. Method according to any of claims 10 to 12, **characterised in that** one of the pipes is aligned along the inner face (8) of the sleeve by being inserted into the hollow-cylindrical sleeve (5).

## Revendications

1. Ensemble de tubes comprenant deux tubes et un manchon (5), les deux tubes comprenant une paroi métallique extérieure (2) et des faces d'extrémité (3) dirigées les unes vers les autres et étant reliés entre eux par le manchon (5) disposé à l'extérieur des tubes et soudé à au moins un tube, l'ensemble de tubes comportant une garniture intérieure (1) en matière plastique sensible à la chaleur et un isolant (7) étant intégré entre la paroi métallique (2) et la garniture (1) en matière plastique et dans la direction circonférentielle du tube le long d'un cordon de soudure qui est situé à distance de la face d'extrémité (3) d'un premier tube dans la direction longitudinale du tube et qui relie le manchon (5) à ce tube, les deux tubes comportant une garniture intérieure (1) en matière plastique sensible à la chaleur interne qui est en appui, dans la zone particulièrement critique des faces d'extrémité du tube, directement sur la paroi métallique ou une couche adhésive ou intermédiaire, **caractérisé en ce que** l'isolant est fixé directement sur la paroi métallique (2) du tube.

2. Ensemble de tubes selon la revendication 1, **caractérisé en ce que** l'isolant (7) a une forme de base cylindrique creuse.

3. Ensemble de tubes selon la revendication 2, **caractérisé en ce que** l'isolant (7) comporte une bague métallique et de préférence une couche supplémentaire thermo-isolante qui est reliée à la bague métallique.

4. Ensemble de tubes selon l'une des revendications précédentes, **caractérisé en ce que** l'isolant (7) est soudé à la paroi métallique (2).

5. Ensemble de tubes selon l'une des revendications précédentes, **caractérisé en ce que** les deux tubes comportent chacun un isolant (7) situé à distance de leurs faces d'extrémité (3) et entre la garniture (1) et la paroi métallique (2).

6. Ensemble de tubes selon l'une des revendications précédentes, **caractérisé en ce qu'**un côté intérieur (8) du manchon (5) en forme de cylindre creux s'étend au moins sensiblement parallèlement à un côté extérieur (9) des tubes dans la direction longitudinale R des tubes.

7. Ensemble de tubes selon la revendication 6, **caractérisé en ce que** le cordon de soudure (6) relie une face d'extrémité du manchon à la face extérieure (9) d'un tube.

8. Ensemble de tubes selon l'une des revendications précédentes, **caractérisé en ce que** les faces d'extrémité (3) des tubes sont pourvus avec d'un bord d'about (4) en matière plastique.

9. Ensemble de tubes selon la revendication 8, **caractérisé en ce que** le bord d'about (4) de chaque tube est formé d'une seule pièce avec la garniture (1).

10. Procédé de fabrication d'un ensemble de tubes selon l'une des revendications précédentes, **caractérisé en ce que** les tubes sont réalisés chacun à la paroi métallique (2) et la garniture intérieure sensible à la chaleur, l'isolant (7) étant appliqué sur la face intérieure de la paroi métallique (2) au moins d'un tube à distance de la face d'extrémité (3) puis est intégré dans le tube par la mise en place de la garniture (1) du tube et **en ce que** le tube est soudé à un manchon (5) sur l'isolant (7) au niveau de la paroi métallique (2) étant inséré dans le manchon (5).

11. Procédé selon la revendication 10, **caractérisé en ce que** le manchon (5), à souder au tube, est relié de manière fixe au tube contigu et a déjà été soudé à l'autre tube avant la mise en place de la garniture (1) de cet autre tube.

12. Procédé selon la revendication 10, **caractérisé en ce qu'**un isolant (7) est intégré dans les deux tubes et **en ce que** le manchon (5) est soudé aux deux tubes.

13. Procédé selon l'une des revendications 10 à 12, **caractérisé en ce que** l'un des tubes est orienté, par insertion dans le manchon (5) en forme de cylindre creux, le long de la face intérieure (8) de celui-ci.
